(19)

Europäisches Patentamt
European Patent Office
Office européen des brevets

(11) **EP 2 877 620 B1**

(12) **EUROPEAN PATENT SPECIFICATION**

(45) Date of publication and mention of the grant of the patent:
**01.05.2019 Bulletin 2019/18**

(21) Application number: **13747913.5**

(22) Date of filing: **25.07.2013**

(51) Int Cl.:
***D02G 3/44*** *(2006.01)*

(86) International application number:
**PCT/US2013/051921**

(87) International publication number:
**WO 2014/018697 (30.01.2014 Gazette 2014/05)**

(54) **FIBER BLENDS, YARNS, FABRICS, AND GARMENTS FOR ARC AND FLAME PROTECTION**

FASERMISCHUNGEN, GARNE, GEWEBE UND KLEIDUNGSSTÜCKE FÜR LICHTBOGEN- UND FLAMMSCHUTZ

MÉLANGES DE FIBRES, FILS, TISSUS ET VÊTEMENTS DE PROTECTION CONTRE LES ARCS ET LES FLAMMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.07.2012 US 201213559966**

(43) Date of publication of application:
**03.06.2015 Bulletin 2015/23**

(73) Proprietor: **E. I. du Pont de Nemours and Company Wilmington, DE 19898 (US)**

(72) Inventor: **ZHU, Reiyao Moseley, Virginia 23120 (US)**

(74) Representative: **Heinemann, Monica Abitz & Partner Patentanwälte mbB Arabellastraße 17 81925 München (DE)**

(56) References cited:
**WO-A1-2008/114285   WO-A1-2012/068600 US-A1- 2010 112 312   US-A1- 2012 003 472**

**Description**

**BACKGROUND OF THE INVENTION**

**1. Field of the Invention**

This invention relates to more durable fiber blends, having improved performance at lower weight, that are useful for arc and flame protective yarns, fabrics, and garments.

**2. Description of Related Art**

United States Patent Application Publication 2010/0112312 to Tutterow et al. discloses a fiber blend of approximately 30-60% FR modacrylic fibers, approximately 20-60% synthetic cellulosic fibers, and approximately 5-30% additional inherently FR fibers.

United States Patent No. 8,133,584 to Zhu et al. discloses yarns and fabrics consisting of 50 to 80 weight percent meta-aramid fiber having a degree of crystallinity of at least 20 %, 10 to 30 weight percent flame-retardant rayon fiber, 10 to 20 weight percent modacrylic fiber, 0 to 5 weight percent para-aramid fiber, and 0 to 3 weight percent antistatic fiber.

WO 2012/068600 describes a commercially available fabric made of 25% modacrylic, 25% lyocell and 50% aramid. WO 2008/114285 discloses a fire resistant fabric comprising two distinct layers: a fiber layer formed from aramid fiber threads and modacrylic threads, and a second layer formed from a mixture of viscose fiber threads and modacrylic threads.

Arc and flame protection deals with the saving of human life, therefore any improvement that provides the combination of improved flash fire performance with a high level of arc protection at a low basis weight is desired.

**SUMMARY OF THE INVENTION**

This invention relates to a fiber blend, yarn, fabric, and/or garment suitable for use in arc and flame protection comprising (a) greater than 30 weight percent aramid fiber, wherein the aramid fiber is distributed as 2 to 20 weight percent para-aramid fiber and 10 to 57 weight percent meta-aramid fiber, wherein the meta-aramid is poly(metaphenylene isophthalamide) and the para-aramid is poly(paraphenylene terephthalamide); (b) 20 to 35 weight percent modacrylic fiber; (c) 20 to 35 weight percent rayon fiber having a limiting oxygen index of 21 or less, and having a dry tensile strength of 3 grams per denier or greater; and (d) 0 to 3 weight percent antistatic fiber; the percentages on the basis of components (a), (b), (c), and (d); wherein the difference in the amount of the modacrylic fiber and the rayon fiber present in the blend, yarn, fabric, and/or garment is 10 percent by weight or less, and wherein the amount of the rayon fiber is greater than the amount of the modacrylic fiber.

**BRIEF DESCRIPTION OF THE DRAWINGS**

The Figure illustrates the surprisingly superior arc resistance performance of the fabric containing the blend of fibers.

**DETAILED DESCRIPTION OF THE INVENTION**

This invention relates to a fiber blend useful for arc and flame protective apparel that contains a significant quantity of rayon having both a limiting oxygen index of 21 or less and a high dry tensile strength of at least 3 grams per denier. Fabrics and garments produced from this blend provide surprising arc protection performance at lower fabric weights, in some embodiments in an of excess of 0.148 joules per square centimeter per grams per square meter (1.2 calories per square centimeter per ounce per square yard).

The fabrics also have excellent char length performance in some embodiments of less than 10.2 cm (4 inches). This is significant in that since the rayon has a limiting oxygen index of 21 or less it will burn in air.

Electrical arcs typically involve thousands of volts and thousands of amperes of electrical current, exposing the garment or fabric to intense incident energy. To offer protection to a wearer a garment or fabric must resist the transfer of this energy through to the wearer.

This fiber blend, yarn, fabric, and/or garment comprises (a) greater than 30 percent aramid fiber; (b) 20 to 35 weight percent modacrylic fiber; (c) 20 to 35 weight percent rayon fiber having a limiting oxygen index of 21 or less, and having a dry tensile strength of 3 grams per denier or greater; and (d) 0 to 3 weight percent antistatic fiber; the percentages on the basis of components (a), (b), (c), and (d). The difference in the amount of the modacrylic fiber and the rayon fiber present in the blend, yarn, fabric, and/or garment is 10 percent by weight or less.

In some embodiments, the aramid fiber is present in the blend, yarn, fabric, and/or garment in an amount of up to and including 59 weight percent.

The minimum amount of aramid fiber present in the blend, yarn, fabric, and/or garment is greater than 30 percent and the maximum amount is up to and including 59 weight percent; with the aramid fiber consisting of para-aramid fiber and the meta-aramid fiber distributed within those minimum/maximum values as 2 to 20 weight percent para-aramid fiber and 10 to 57 weight percent meta-aramid fiber.

The difference in the amount of the modacrylic fiber and the rayon fiber present in the blend, yarn, fabric, and/or garment is 10 percent by weight or less, and the amount of rayon fiber is greater than the amount of modacrylic fiber.

The fiber blend can be used in the form of a yarn. By "yarn" is meant an assemblage of fibers spun or twisted together to form a continuous strand that can be used in weaving, knitting, braiding, or plaiting, or otherwise made into a textile material or fabric. Yarns can be produced by yarn spinning techniques such as but not limited to ring spinning, core spinning, and air jet spinning, including air spinning techniques such as Murata air jet spinning where air is used to twist staple fibers into a yarn. If single yarns are produced, they are then preferably plied together to form a ply-twisted yarn comprising at least two single yarns prior to being converted into a fabric. In some embodiments, the yarns can comprise continuous filaments.

The fiber blend can be used in the form of a fabric. The term fabric refers to a desired protective layer that has been woven, knitted, or otherwise assembled, using in one embodiment one or more of the different types of yarn previously described. A preferred embodiment is a woven fabric, and a preferred weave is a twill weave.

In some preferred embodiments the fabric has a char length according to NFPA 2112 of less than 10.2 cm (4 inches). Char length is a measure of the flame resistance of a textile. A char is defined as a carbonaceous residue formed as the result of pyrolysis or incomplete combustion. The char length of a fabric under the conditions of test of ASTM 6413-08 as reported in this specification is defined as the distance from the fabric edge that is directly exposed to the flame to the furthest point of visible fabric damage after a specified tearing force has been applied. Per NFPA 2112, a flash fire standard, the fabric should have a char length of less than 4 inches (10.2 cm). Per ASTM F1506, an arc resistance standard, the fabric should have a char length of less than 15.24 cm (6 inches).

In some preferred embodiments the fabrics have an arc resistance, normalized for basis weight, of equal or greater than 1.2 calories per square centimeter per ounce per square yard (0.148 joules per square centimeter per grams per square meter). In some preferred embodiments, the arc resistance is greater than 1.3 calories per square centimeter per ounce per square yard (0.160 joules per square centimeter per grams per square meter).

As the amount of fabric per unit area increases, the amount of material between a potential hazard and the subject to be protected increases. An increase in fabric basis weight results in increased break-open resistance, increased thermal protection factor, and increased arc protection; however it is not evident how improved performance can be achieved with lighter weight fabrics. The basis weight of fabrics that have both the desired arc and flash fire performance is 135 g/m$^2$ (4 oz/yd$^2$) or greater, and in some embodiments the basis weight is 186.5 g/m$^2$ (5.5 oz/yd$^2$) or greater. In some preferred embodiments the basis weight is 220 g/m$^2$ (6.5 oz/yd$^2$) or greater. In some embodiments, the preferred maximum basis weight is 288 g/m$^2$ (8.5 oz/yd$^2$); in some other embodiments, the maximum basis weight is 407 g/m$^2$ (12 oz/yd$^2$). Above this maximum the comfort benefits of the lighter weight fabric in single fabric garments is believed to be reduced, because it is believed higher basis weight fabric would show increased stiffness.

In one embodiment, to provide protection from the intense thermal stresses caused by electrical arcs, the arc protective fabric and garments formed from that fabric have a limiting oxygen index above the concentration of oxygen in air (that is, it is greater than 21 and preferably greater than 25).

Yarns having the proportions of aramid fiber, modacrylic fiber, rayon fiber, and antistatic fiber as previously described, are preferably exclusively present in the fabric. In the case of a preferred woven fabric, the yarns are used in both the warp and fill of the fabric. If desired, the relative amounts of aramid fiber, modacrylic fiber, rayon fiber, and antistatic fiber can vary in the yarns as long as the composition of the yarns falls within the previously described ranges.

In an preferred embodiment, the yarns used in the making of fabrics consist essentially of the aramid fiber, modacrylic fiber, rayon fiber, and antistatic fiber as previously described, in the proportions described, and do not include any other additional thermoplastic or combustible fibers or materials. Other materials and fibers, such as polyamide or polyester fibers, provide combustible material to the yarns, fabrics, and garments, and are believed to affect the flash fire performance of the garments.

Fabrics containing the fiber blend can be used to make protective garments. In some embodiments, the fabric is used as a single layer in a protective garment. Within this specification the protective value of a fabric is reported for a single layer of that fabric. In some embodiments this invention also includes a multi-layer garment made from the fabric. The fabric can be converted into garments, including single-layer protective garments such as shirts, pants, and coveralls, by cutting panels of the fabric via standard coverall patterns and sewing the panels together.

In some particularly useful embodiments, spun staple yarns having the proportions of aramid fiber, modacrylic fiber, rayon fiber and antistatic fiber as previously described are used to make flame-resistant garments. The preferred basis weight of fabrics in these garments is 150 g/m$^2$ (4.5 oz/yd$^2$) or greater. In some embodiments, the preferred maximum basis weight is 290 g/m$^2$ (8.5 oz/yd$^2$).

In some embodiments the garments can have essentially one layer of the protective fabric made from the spun staple yarn. Exemplary garments of this type include jumpsuits and coveralls for fire fighters or for military personnel. Such suits are typically used over the firefighters clothing and can be used to parachute into an area to fight a forest fire. Other garments can include pants, shirts, gloves, sleeves and the like that can be worn in situations such as chemical processing industries or industrial electrical/utility where an extreme thermal event might occur.

In some embodiments, garments made from yarns having the proportions of aramid fiber, modacrylic fiber, rayon fiber, and antistatic fiber as previously described provide thermal protection to the wearer that is equivalent to less than a 65 percent predicted body burn when exposed to a flash fire of 4 seconds while maintaining a Category 2 arc rating. This is a significant improvement over the minimum standard of less than a 50 percent predicted body burn to the wearer at a 3 second exposure; burn injury is essentially exponential in nature with respect to flame exposure for some other flame resistance fabrics. The protection provided by the garment, should there be an additional second of flame exposure time, can potentially mean the difference between life and death.

There are two common category rating systems for arc ratings. The National Fire Protection Association (NFPA) has 4 different categories with Category 1 having the lowest performance and Category 4 having the highest performance. Under the NFPA 70E system, Categories 1,2,3, and 4 correspond to a heat flux through the fabric of 4, 8, 25, and 40 calories per square centimeter, respectively. The National Electric Safety Code (NESC) also has a rating system with 3 different categories with Category 1 having the lowest performance and Category 3 having the highest performance. Under the NESC system, Categories 1,2, and 3 correspond to a heat flux through the fabric of 4, 8, and 12 calories per square centimeter, respectively. Therefore, a fabric or garment having a Category 2 arc rating can withstand a thermal flux of 8 calories per square centimeter, as measured per standard set method ASTM F1959.

The performance of the garments in a flash fire is measured using an instrumented mannequin using the test protocol of ASTM F1930. The mannequin is clothed in the garment and exposed to flames from burners and sensors measure the localized skin temperatures that would be experienced by a human body if subjected to the same amount of flames. Given a standard flame intensity, the extent of the burns that would be experienced by a human, (i.e., first degree, second degree, etc.) and the percent of the body burned can be determined from the mannequin temperature data. A low predicted body burn is an indication of better protection of the garment in flash fire hazard.

The fiber blend, yarn, fabric, and/or garment contains rayon having both a limiting oxygen index of 21 or less and a high dry tensile strength of at least 3 grams per denier. Generally, any rayon fiber used in protective apparel is flame-retardant-treated rayon fiber. Flame retardants can be incorporated into the rayon fiber by adding flame retardant chemicals into the spin solution and spinning the flame retardant into the rayon fiber, coating the rayon fiber with the flame retardant, contacting the rayon fiber with the flame retardant and allowing the fiber to absorb the flame retardant, or any other process that incorporates a flame retardant into or with a rayon fiber. However, the processes for providing flame retardants weakens the dry strength of the rayon, and significantly weakens the wet strength of the rayon. Therefore, the present blend, yarn, fabric, and/or garment, for durability, contains a stronger rayon made without flame retardants. As used herein, the phrase "rayon having a limiting oxygen index of 21 or less" and the phrase "non-flame-retardant rayon" are considered to mean the same thing.

As used herein "dry tenacity" refers to the tensile testing of the fibers under standard conditions without conscious wetting of the fibers, and "wet tenacity" refers to the tensile testing of the fibers while wet.

The term tensile strength refers to the maximum amount of stress that can be applied to a material before rupture or failure. The tear strength is the amount of force required to tear a fabric. In general the tensile strength of a fabric relates to how easily the fabric will tear or rip. The tensile strength can also relate to the ability of the fabric to avoid becoming permanently stretched or deformed. The tensile and tear strengths of a fabric should be high enough so as to prevent ripping, tearing, or permanent deformation of the garment in a manner that would significantly compromise the intended level of protection of the garment.

The use of non-flame-retardant rayon balances the tenacity of the major fibers used in the blend. In other words, the non-flame-retardant rayon has a tenacity that is comparable with the modacrylic and meta-aramid fibers, which is believed to help provide a synergistic result in surprising performance.

It is known that man-made cellulose fibre can be made by extrusion of a solution of cellulose in a suitable solvent into a coagulating bath. One example of such a process is described in U.S. Pat. No. 4,246,221. Cellulose is dissolved in a solvent such as an aqueous tertiary amine N-oxide, for example N-methylmorpholine N-oxide. The resulting solution is then extruded through a suitable die into an aqueous bath to produce an assembly of filaments which is washed in water to remove the solvent and is subsequently dried. This process is referred to as "solvent-spinning", and the cellulose fibre produced thereby is referred to as "solvent-spun" cellulose fibre or as lyocell fibre. Lyocell fibre is to be distinguished from cellulose fibre made by other known processes, which rely on the formation of a soluble chemical derivative of cellulose and its subsequent decomposition to regenerate the cellulose, for example the viscose process.

In some embodiments, the preferred non-flame-retardant rayon is lyocell fiber. As used herein, the term "lyocell fibre" means a cellulose fibre obtained by an organic solvent spinning process, wherein the organic solvent essentially comprises a mixture of organic chemicals and water, and wherein solvent spinning involves dissolving cellulose in the organic solvent to form a solution which is spun into fibre without formation of a derivative of the cellulose. As used herein, the terms "solvent-spun cellulose fibre" and "lyocell fibre" are synonymous. Groups of these filaments may be formed into yarns or cut into staple and further processed into spun staple yarns. The blend, yarn, fabric, and/or garment has at least 20 weight percent rayon fiber. In some embodiments, at least 28 weight percent of the blend is rayon fibers. In some embodiments, the preferred maximum amount of rayon fibers is 35 weight percent.

Since the non-flame-retardant rayon will burn in air, it is paired with modacrylic to compensate for the lack of flame-retardant properties. Specifically, the difference in the amount of modacrylic and rayon fibers in the blend, yarn, fabric, and/or garment is 10 percent by weight or less.

Use of the high quantity of aramid fiber in the blend also allows the liberal use of non-flame-retardant rayon, allowing it to be present in an amount greater than the amount of modacrylic in some embodiments.

As used herein, "aramid" is meant a polyamide wherein at least 85% of the amide (-CONH-) linkages are attached directly to two aromatic rings. Additives can be used with the aramid and, in fact, it has been found that up to as much as 10 percent, by weight, of other polymeric material can be blended with the aramid or that copolymers can be used having as much as 10 percent of other diamine substituted for the diamine of the aramid or as much as 10 percent of other diacid chloride substituted for the diacid chloride of the aramid. Suitable aramid fibers are described in Man-Made FibersScience and Technology, Volume 2, Section titled Fiber-Forming Aromatic Polyamides, page 297, W. Black et al., Interscience Publishers, 1968. Aramid fibers are, also, disclosed in U.S. Pat. Nos. 4,172,938; 3,869,429; 3,819,587; 3,673,143; 3, 354,127; and 3,094,511. Meta-aramid are those aramids where the amide linkages are in the meta-position relative to each other, and para-aramids are those aramids where the amide linkages are in the para-position relative to each other. The meta-aramid is poly(metaphenylene isophthalamide) and the para-aramid is poly(paraphenylene terephthalamide).

When used in yarns, the meta-aramid fiber provides a flame resistant char forming fiber with an Limiting Oxygen Index (LOI) of about 26. Meta-aramid fiber is also resistant to the spread of damage to the yarn due to exposure to flame. Because of its balance of modulus and elongation physical properties, meta-aramid fiber also provides for a comfortable fabric useful in single-layer fabric garments meant to be worn as industrial apparel in the form of conventional shirts, pants, and coveralls. The blend, yarn, fabric, and/or garment has 10 to to 57 weight percent of the blend meta-aramid fibers.

In some embodiments, the meta-aramid fiber has a degree of crystallinity of at least 20% and more preferably at least 25%. For purposes of illustration due to ease of formation of the final fiber a practical upper limit of crystallinity is 50% (although higher percentages are considered suitable). Generally, the crystallinity will be in a range from 25 to 40%. An example of a commercial meta-aramid fiber having this degree of crystallinity is Nomex® T-450 or T-300 available from E. I. du Pont de Nemours & Company of Wilimington, Delaware.

The degree of crystallinity of an meta-aramid fiber is determined by one of two methods. The first method is employed with a non-voided fiber while the second is on a fiber that is not totally free of voids.

The percent crystallinity of meta-aramids in the first method is determined by first generating a linear calibration curve for crystallinity using good, essentially non-voided samples. For such non-voided samples the specific volume (1/density) can be directly related to crystallinity using a two-phase model. The density of the sample is measured in a density gradient column. A meta-aramid film, determined to be non-crystalline by x-ray scattering methods, was measured and found to have an average density of 1.3356 g/cm3. The density of a completely crystalline meta-aramid sample was then determined from the dimensions of the x-ray unit cell to be 1.4699 g/cm3. Once these 0% and 100% crystallinity end points are established, the crystallinity of any non-voided experimental sample for which the density is known can be determined from this linear relationship:

$$\text{Crystallinity} = \frac{(1/\text{non-crystalline density}) - (1/\text{experimental density})}{(1/\text{non-crystalline density}) - (1/\text{fully-crystalline density})}$$

Since many fiber samples are not totally free of voids, Raman spectroscopy is the preferred method to determine crystallinity. Since the Raman measurement is not sensitive to void content, the relative intensity of the carbonyl stretch at 1650-1 cm can be used to determine the crystallinity of a meta-aramid in any form, whether voided or not. To accomplish this, a linear relationship between crystallinity and the intensity of the carbonyl stretch at 1650 cm-1, normalized to the intensity of the ring stretching mode at 1002 cm-1, was developed using minimally voided samples whose crystallinity was previously determined and known from density measurements as described above. The following empirical relationship, which is dependent on the density calibration curve, was developed for percent crystallinity using a Nicolet Model 910 FT-Raman Spectrometer:

$$\% \text{ crystallinity} = 100.0 \quad x \quad \frac{(\ I(1650 \text{ cm-1}) - 0.2601)}{0.1247}$$

where I(1650 cm-1) is the Raman intensity of the meta-aramid sample at that point. Using this intensity the percent crystallinity of the experiment sample is calculated from the equation.

Meta-aramid fibers, when spun from solution, quenched, and dried using temperatures below the glass transition temperature, without additional heat or chemical treatment, develop only minor levels of crystallinity. Such fibers have a percent crystallinity of less than 15 percent when the crystallinity of the fiber is measured using Raman scattering techniques. These fibers with a low degree of crystallinity are considered amorphous meta-aramid fibers that can be crystallized through the use of heat or chemical means. The level of crystallinity can be increased by heat treatment at or above the glass transition temperature of the polymer. Such heat is typically applied by contacting the fiber with heated rolls under tension for a time sufficient to impart the desired amount of crystallinity to the fiber.

The level of crystallinity of m-aramid fibers can be increased by a chemical treatment, and in some embodiments this includes methods that color, dye, or mock dye the fibers prior to being incorporated into a fabric. Some methods are disclosed in, for example, United States Patents 4,668,234; 4,755,335; 4,883,496; and 5,096,459. A dye assist agent, also known as a dye carrier may be used to help increase dye pick up of the aramid fibers. Useful dye carriers include aryl ether, benzyl alcohol, or acetophenone.

It is believed the use of crystalline meta-aramid fiber in the blends, yarns, fabrics, and/or garments as previously described not only can provide improved performance in flash fires, but also results in significantly reduced laundry shrinkage. This reduced shrinkage is based on an identical fabric wherein the only difference is the use of meta-aramid fiber having the degree of crystallinity set forth previously compared to an meta-aramid fiber that has not been treated to increase crystallinity. For purposes herein shrinkage is measured after a wash cycle of 20 minutes with a water temperature of 60°C(140°F). Preferred fabrics demonstrate a shrinkage of 5 percent or less after 10 wash cycles and preferably after 20 cycles.

Para-aramid fibers provide a high tensile strength fiber that when added in adequate amounts in the yarn improves the break-open resistance of fabrics formed from the yarn after flame exposure. Large amounts of para-aramid fibers in the yarns make garments comprising the yarns uncomfortable to the wearer. The blend, yarn, fabric, and/or garment has to 20 weight percent of the blend para-aramid fibers.

By modacrylic fiber it is meant acrylic synthetic fiber made from a polymer comprising primarily acrylonitrile. Preferably the polymer is a copolymer comprising 30 to 70 weight percent of a acrylonitrile and 70 to 30 weight percent of a halogen-containing vinyl monomer. The halogen-containing vinyl monomer is at least one monomer selected, for example, from vinyl chloride, vinylidene chloride, vinyl bromide, vinylidene bromide, etc. Examples of copolymerizable vinyl monomers are acrylic acid, methacrylic acid, salts or esters of such acids, acrylamide, methylacrylamide, vinyl acetate, etc.

The preferred modacrylic fibers are copolymers of acrylonitrile combined with vinylidene chloride, the copolymer having in addition an antimony oxide or antimony oxides for improved fire retardancy. Such useful modacrylic fibers include, but are not limited to, fibers disclosed in United States Patent No. 3,193,602 having 2 weight percent antimony trioxide, fibers disclosed in United States Patent No. 3, 748,302 made with various antimony oxides that are present in an amount of at least 2 weight percent and preferably not greater than 8 weight percent, and fibers disclosed in United States Patent Nos. 5,208,105 & 5,506,042 having 8 to 40 weight percent of an antimony compound.

In some embodiments, the modacrylic fiber has an antimony content of less than 8 weight percent. While antimony has traditionally been used as an additional fire retardant additive in modacrylic fiber, it is believed the yarn, fabric, and garments made from this blend of fibers has surprisingly superior arc performance even without increased amounts of antimony. In one embodiment, the modacrylic fibers have less that 2.0 percent antimony content, and in one preferred embodiment the modacrylic fibers have less than 1.0 percent antimony content. In one most preferred embodiment, the modacrylic fibers are antimony-free, meaning that the fibers are made without the intentional addition of any antimony-based compounds that provide additional antimony content to the fiber over any trace amounts of antimony that might be in the polymer. Use of these low-antimony content or antimony-free fibers provides fabrics that still provide protection while having the potential for less environmental disposal impact.

Within the yarns modacrylic fiber provides a flame resistant char forming fiber with an LOI typically at least 28 depending on the level of doping with antimony derivatives. Modacrylic fiber is also resistant to the spread of damage to the yarn due to exposure to flame. Modacrylic fiber while highly flame resistant does not by itself provide adequate tensile strength to a yarn, or fabric made from the yarn, to offer the desired level of break-open resistance when exposed to an electrical arc. The fiber blend, yarn, fabric, and/or garment has at least 20 weight percent modacrylic fiber. In some embodiments, the amount of modacrylic fiber is at least 30 weight percent.

Because static electrical discharges can be hazardous for workers working with sensitive electrical equipment or near flammable vapors, the fiber blend, yarn, fabric, and/or garment can contain an antistatic component comprising a metal or carbon. Illustrative examples are steel fiber, carbon fiber, or a carbon combined with an existing fiber. The antistatic component is present in an amount of 0 to 3 weight percent of the total fiber blend, yarn, fabric, and/or garment. In some preferred embodiments the antistatic component is present in an amount of only 2 to 3 weight percent. U.S. Patent 4,612,150 (to De Howitt) and U.S. Patent 3,803453 (to Hull) describe an especially useful conductive fiber wherein carbon black is dispersed within a thermoplastic fiber, providing anti-static conductance to the fiber. The preferred antistatic fiber is a carbon-core nylon-sheath fiber. Use of anti-static fibers provides yarns, fabrics, and garments having reduced static propensity, and therefore, reduced apparent electrical field strength and nuisance static.

**TEST METHODS**

The dry and wet tensile strength of the fiber is determined in accordance with ASTM D3822-07 "Standard Test Method for Tensile Properties of Single Textile Fibers".

The abrasion performance of fabrics is determined in accordance with ASTM D-3884-01 "Standard Guide for Abrasion Resistance of Textile Fabrics (Rotary Platform, Double Head Method)".

The arc resistance of fabrics is determined in accordance with ASTM F-1959-06 "Standard Test Method for Determining the Arc Thermal Performance Value of Materials for Clothing".

The antimony content in the modacrylic fiber is determined on a sample of the fabric, since none of the other fibers are provided with antimony as disclosed in their Material Safety Data Sheet. A 0.1 gram sample is obtained from the fabric. The sample is combined first with four milliliters of environmental grade sulfuric acid and then an additional two milliliters of environmental grade nitric acid is added. The sample in acid is heated in a microwave for approximate 2 minutes at a temperature 200 - 220°C to digest the nonmetallic materials. The acid digestate solution is diluted to 100 milliliters in a Class A volumetric flask with Milli-Q Water. The acid solution is then analyzed by ICP Emission Spectrometry using three emission wavelengths at 206.836nm, 217.582nm, and 231.146nm to determine the antimony content.

The break strength of fabrics is determined in accordance with ASTM D-5034-95 "Standard Test Method for Breaking Strength and Elongation of Fabrics (Grab Test)".

The limited oxygen index (LOI) of fabrics is determined in accordance with ASTM G-125-00 "Standard Test Method for Measuring Liquid and Solid Material Fire Limits in Gaseous Oxidants".

The tear resistance of fabrics is determined in accordance with ASTM D-5587-03 "Standard Test Method for Tearing of Fabrics by Trapezoid Procedure".

The thermal protection performance of fabrics is determined in accordance with NFPA 2112 "Standard on Flame Resistant Garments for Protection of Industrial Personnel Against Flash Fire". The term thermal protective performance (or TPP) relates to a fabric's ability to provide continuous and reliable protection to a wearer's skin beneath a fabric when the fabric is exposed to a direct flame or radiant heat.

Flash fire protection level testing was done according to ASTM F-1930 using an instrumented thermal mannequin with standard pattern coverall made with the test fabric.

The char length of fabrics is determined in accordance with ASTM D-6413-08 "Standard Test Method for Flame Resistance of Textiles (Vertical Method)".

The minimum concentration of oxygen, expressed as a volume percent, in a mixture of oxygen and nitrogen that will just support flaming combustion of a fabrics initially at room temperature is determined under the conditions of ASTM G125 / D2863.

Shrinkage is determined by physically measuring unit area of a fabric after one or more wash cycles. A cycle denotes washing the fabric in an industrial washing machine for 20 minutes with a water temperature of 60°C (140°F). To illustrate the present invention, the following examples are provided. All parts and percentages are by weight and degrees in Celsius unless otherwise indicated.

**Example 1**

This example illustrates a fiber blend, yarn, fabric, and garment. An intimate blend of fibers was made from modacrylic fibers, lyocell fibers (without any flame retardant), poly(m-phenylene isophthalamide) (MPD-I) fibers, poly(p-phenylene terephthalamide)(PPD-T) fibers, and antistatic fibers. Specifically the blend was made by blending 32 weight percent commercially available Protex®C modacrylic fibers (available from Kaneka Corporation), 33 weight percent Tencel® lyocell fibers (available from Lenzing Fibers Corporation), and 15 weight percent Kevlar® 29 PPD-T fibers (available from DuPont) with 20 weight percent of Nomex® N302 aramid fiber blend (also available from DuPont). The Nomex® N302 aramid fiber blend is 93% (MPD-I) fibers, 5% (PPD-T) fibers, and 2% of P140 antistatic carbon-core/nylon-sheath fibers (available from Invista), The modacrylic fiber contained ACN/polyvinylidene chloride co-polymer with an antimony content >2%.

A picker blend sliver was prepared from the blend and processed in a conventional cotton system into a spun staple yarn using an airjet spinning frame. The resultant yarn was a 19.6 tex (30 cotton count) single yarn. Two of these single yarns were then plied on a plying machine using 10 turns/inch ply twist to make a two-ply yarn.

A comfortable and durable woven fabric was then made, using this two-ply yarn in both the warp and the fill, on a shuttle loom in a 2x1 twill construction. The greige twill fabric had a construction of 30 ends x 20 picks per cm (75 ends x 50 picks per inch), and a basis weight of 210 g/m$^2$ (6.2 oz/yd$^2$). The greige twill fabric prepared was the scoured in hot water and dried under low tension.

A 220 g/m$^2$ (6.5 oz/yd$^2$) yarn sample of this fabric was then tested for its arc performance and the results are shown on the Figure as point **3.**

The resultant fabric is also converted into single-layer protective coveralls by cutting panels of the fabric via standard coverall patterns and sewing the panels together.

### Comparative Example A

The procedure of Example 1 was duplicated with fibers obtained from the same sources, however, no lyocell fiber was used and the blend was made by blending 62 weight percent modacrylic fibers, 10 weight percent PPD-T fibers, and 28 weight percent of the Nomex® N319 aramid fiber blend. The Nomex® N319 aramid fiber blend is 65% (MPD-I) fibers, 29% (PPD-T) fibers, and 6% of P140 antistatic carbon-core/nylon-sheath fibers (available from Invista).

Using this blend, the procedure of Example 1 was followed to make a similar two-ply yarn using two 19.6tex (30 cotton count) single yarns was made and used in the warp of the woven fabric. For the fill yarn, a two-ply yarn was used, made from two 21tex (28 cotton count) singles yarns having the same composition as the warp singles yarns.

As in Example 1, the yarns were used to make a woven fabric having 2x1 twill construction. The greige twill fabric had a construction of 29 ends x 18 picks per cm (72 ends x 46 picks per inch), and a basis weight of 210 g/m^2 (6.2 oz/yd^2). The greige twill fabric prepared as described above was scoured in hot water and dried under low tension.

### Comparative Example B

Table 1 of United States Patent Application Publication 2010/0112312 to Tutterow et al. discloses the arc performance of four different fabric blends. According to that table, Fabric Blend #4 is the highest performing blend, having the highest Ratio of ATPV (thermal protective values) to Weight. Fabric Blend #4 is an intimate blend of 48 weight percent modacrylic fibers, 37 weight percent non-flame retardant lyocell fibers, and 15 weight percent para-aramid fibers. The ATPV of the two basis weights of this composition is shown graphically in the Figure, with the line **1** drawn between these two points. It is believed that this line can be extrapolated downward as shown at **2** to reflect the performance of this blend at lower basis weights.

As previously stated, point **3** represents the performance of the inventive sample of Example 1. This performance is believed to be at least equivalent to the performance of the blend of Comparative Example B at a lower basis weight (approximately 0.50 ounces/sq. yd. (16.9 g/m)$^2$ lower). Further, it is believed that other basis weights made with the composition of Example 1 would have performance as indicated in the area **4,** showing equivalent performance at lower weights, or improved performance at any one basis weight. In addition, the table shown below illustrates other properties and performance of the resulting fabric and garments. A "+" indicates superior properties to those of the control, while the notation "0" indicates the performance of the control or performance equivalent to the control. As shown in the table, the inventive sample has an improved overall set of properties, including perceived comfort, over both Comparative Examples A and B.

**Table**

| Property | Example 1 | Comparative Example A | Comparative Example B |
|---|---|---|---|
| Grab Test Break Strength (lbf) W/F* | 0 | 0 | - |
| Trap Tear (lbf) W/F | 0 | 0 | - |
| Taber Abrasion (Cycles)CS-10/1000 g | 0 | 0 | 0 |
| TPP (cal/cm$^2$) | 0 | 0 | 0 |
| Vertical Flame (in) W/F | ++ | 0 | 0 |
| Instrumented Thermal Manikin Test (% of body burn) | ++ | 0 | + |
| ARC rating(cal/cm$^2$) | 0 | + | - |

(continued)

| Property | Example 1 | Comparative Example A | Comparative Example B |
|---|---|---|---|
| Perceived Comfort | + | 0 | 0 |
| * warp/fill | | | |

Claims

1. A blend of fibers for use in arc and flame protection fabrics comprising:

   a) greater than 30 weight percent aramid fiber; wherein the aramid fiber is distributed as 2 to 20 weight percent para-aramid fiber and 10 to 57 weight percent meta-aramid fiber, wherein the meta-aramid is poly(metaphenylene isophthalamide) and the para-aramid is poly(paraphenylene terephthalamide);
   b) 20 to 35 weight percent modacrylic fiber;
   c) 20 to 35 weight percent rayon fiber having a limiting oxygen index of 21 or less, and having a dry tensile strength of 3 grams per denier or greater; and
   d) 0 to 3 weight percent antistatic fiber;
   the percentages on the basis of components a), b), c), and d); wherein the difference in the amount of the modacrylic fiber and the rayon fiber present in the blend is 10 percent by weight or less, and wherein the amount of the rayon fiber is greater than the amount of the modacrylic fiber.

2. The blend of claim 1 wherein the aramid fiber is present in an amount of up to and including 59 weight percent.

3. The blend of claim 1 in the form of a yarn.

4. A fabric suitable for use in arc and flame protection comprising a yarn comprising:

   a) greater than 30 weight percent aramid fiber, wherein the aramid fiber is distributed as 2 to 20 weight percent para-aramid fiber and 10 to 57 weight percent meta-aramid fiber, wherein the meta-aramid is poly(metaphenylene isophthalamide) and the para-aramid is poly(paraphenylene terephthalamide);
   b) 20 to 35 weight percent modacrylic fiber;
   c) 20 to 35 weight percent rayon fiber having a limiting oxygen index of 21 or less, and having a dry tensile strength of 3 grams per denier or greater; and
   d) 0 to 3 weight percent antistatic fiber;
   the percentages on the basis of components a), b), c), and d); wherein the difference in the amount of the modacrylic fiber and the rayon fiber present in the yarn is 10 percent by weight or less, and wherein the amount of the rayon fiber is greater than the amount of the modacrylic fiber;
   the fabric has a basis weight in the range of 135 to 407 grams per square meter (4 to 12 ounces per square yard).

5. The fabric of claim 4 wherein the aramid fiber is present in the yarn in an amount of up to and including 59 weight percent.

6. The fabric of claim 4 having a char length according to ASTM D-6413-08 of less than 10.2 cm (4 inches).

7. The fabric of claim 4 having arc resistance according to ASTM F-1959-06 greater than 0.148 joules per square centimeter per grams per square meter (1.2 calories per square centimeter per ounce per square yard) of fabric.

8. A garment suitable for use in arc and flame protection comprising a fabric of claim 4.

9. The garment of claim 8 wherein the fabric has a basis weight in the range of 150 to 290 grams per square meter (4.5 to 8.5 ounces per square yard).

10. The garment of claim 8 wherein the aramid fiber is present in the fabric in an amount of up to and including 59 weight percent.

**11.** The garment of claim 8 providing thermal protection equivalent to less than a 65 % body burn at a 4 sec flame exposure per ASTM F1930, while maintaining a Category 2 arc rating per ASTM F1959 and NFPA 70E.

**12.** The garment of claim 8 wherein the fabric has an arc resistance according to ASTM F-1959-06 greater than 0.148 joules per square centimeter per grams per square meter (1.2 calories per square centimeter per ounce per square yard) of fabric.

**Patentansprüche**

**1.** Fasermischung zum Gebrauch für Lichtbogen- und Flammenschutzgewebe, Folgendes beinhaltend:

a) mehr als 30 Gewichtsprozent Aramidfasern; wobei die Aramidfasern wie folgt verteilt sind: 2 bis 20 Gewichtsprozent Para-Aramidfasern und 10 bis 57 Gewichtsprozent Meta-Aramidfasern, wobei das Meta-Aramid Poly(metaphenylenisophthalamid) ist und das Para-Aramid Poly(paraphenylenterephthalamid) ist;
b) 20 bis 35 Gewichtsprozent Modacrylfasern;
c) 20 bis 35 Gewichtsprozent Rayonfasern, welche einen begrenzenden Sauerstoffindex von 21 oder darunter besitzen, und welche eine Trockenzugfestigkeit von 3 Gramm pro Denier oder darüber besitzen; und
d) 0 bis 3 Gewichtsprozent antistatische Fasern;

wobei die Prozentsätze auf der Grundlage der Komponenten a), b), c), und d) gelten; wobei die Differenz in der Menge der Modacrylfasern und der Rayonfasern, welche in der Mischung vorliegen, 10 Gewichtsprozent oder darunter beträgt und wobei die Menge der Rayonfasern größer ist als die Menge der Modacrylfasern.

**2.** Mischung nach Anspruch 1, bei welchem die Aramidfasern in einer Menge von bis zu und einschließlich 59 Gewichtsprozent vorliegen.

**3.** Mischung nach Anspruch 1 in der Form eines Garns.

**4.** Gewebe, welches sich zum Gebrauch für Lichtbogen- und Flammenschutz eignet, welches ein Garn beinhaltet, welches Folgendes beinhaltet:

a) mehr als 30 Gewichtsprozent Aramidfasern, wobei die Aramidfasern wie folgt verteilt sind: 2 bis 20 Gewichtsprozent Para-Aramidfasern und 10 bis 57 Gewichtsprozent Meta-Aramidfasern, wobei das Meta-Aramid Poly(metaphenylenisophthalamid) ist und das Para-Aramid Poly(paraphenylenterephthalamid) ist;
b) 20 bis 35 Gewichtsprozent Modacrylfasern;
c) 20 bis 35 Gewichtsprozent Rayonfasern, welche einen begrenzenden Sauerstoffindex von 21 oder darunter besitzen, und welche eine Trockenzugfestigkeit von 3 Gramm pro Denier oder darüber besitzen; und
d) 0 bis 3 Gewichtsprozent antistatische Fasern;

wobei die Prozentsätze auf der Grundlage der Komponenten a), b), c), und d) gelten; wobei die Differenz in der Menge der Modacrylfasern und der Rayonfasern, welche in dem Garn vorliegen, 10 Gewichtsprozent oder darunter beträgt und wobei die Menge der Rayonfasern größer ist als die Menge der Modacrylfasern; und
wobei das Gewebe ein Grundgewicht in dem Bereich von 135 bis 407 Gramm pro Quadratmeter (4 bis 12 Unzen pro Quadratyard) besitzt.

**5.** Gewebe nach Anspruch 4, bei welchem die Aramidfasern in einer Menge von bis zu und einschließlich 59 Gewichtsprozent in dem Garn vorliegen.

**6.** Gewebe nach Anspruch 4, welches eine Verkohlungslänge nach ASTM D-6413-08 von unter 10,2 cm (4 Zoll) besitzt.

**7.** Gewebe nach Anspruch 4, welches eine Lichtbogenbeständigkeit nach ASTM F-1959-06 von über 0,148 Joule pro Quadratzentimeter pro Gramm pro Quadratmeter (1,2 Kalorien pro Quadratzentimeter pro Unze pro Quadratyard) Gewebe besitzt.

**8.** Kleidungsstück, welches sich zum Gebrauch für Lichtbogen- und Flammenschutz eignet, welches ein Gewebe nach Anspruch 4 beinhaltet.

9.  Kleidungsstück nach Anspruch 8, bei welchem das Gewebe ein Grundgewicht in dem Bereich von 150 bis 290 Gramm pro Quadratmeter (4,5 bis 8,5 Unzen pro Quadratyard) besitzt.

10. Kleidungsstück nach Anspruch 8, bei welchem die Aramidfasern in einer Menge von bis zu und einschließlich 59 Gewichtsprozent in dem Gewebe vorliegen.

11. Kleidungsstück nach Anspruch 8, welches Hitzeschutz bereitstellt, welches einer Körperverbrennung von kleiner als 65 % bei einer Flammenexposition von 4 Sekunden nach ASTM F1930 entspricht, wobei es eine Lichtbogen-Klassifizierung der Kategorie 2 nach ASTM F1959 und NFPA 70E aufrecht erhält.

12. Kleidungsstück nach Anspruch 8, bei welchem das Gewebe eine Lichtbogenbeständigkeit nach ASTM F-1959-06 von über 0,148 Joule pro Quadratzentimeter pro Gramm pro Quadratmeter (1,2 Kalorien pro Quadratzentimeter pro Unze pro Quadratyard) Gewebe besitzt.

## Revendications

1.  Mélange de fibres destiné à être utilisé dans les tissus de protection contre les arcs et les flammes, comprenant :

    a) plus de 30 % en poids de fibre d'aramide, dans lequel la fibre d'aramide est distribuée en 2 à 20 % en poids de fibre de para-aramide et 10 à 57 % en poids de fibre de méta-aramide, dans lequel la méta-aramide est du poly(métaphénylène isophtalamide) et la para-aramide est du poly(téréphtalamide de paraphénylène) ;
    b) de 20 à 35 % en poids de fibre modacrylique ;
    c) de 20 à 35 % en poids de fibre de rayonne présentant un indice limite d'oxygène de 21 ou moins, et présentant une résistance à la traction à sec de 3 grammes par denier ou plus ; et
    d) de 0 à 3 % en poids de fibre antistatique ;

    les pourcentages étant exprimés sur la base des composants a), b), c) et d) ; dans lequel la différence entre la quantité de la fibre modacrylique et la quantité de la fibre de rayonne qui sont présentes dans le mélange est de 10 % en poids ou moins, et dans lequel la quantité de la fibre de rayonne est supérieure à la quantité de la fibre modacrylique.

2.  Mélange selon la revendication 1, dans lequel la fibre d'aramide est présente en une quantité jusqu'à y compris 59 % en poids.

3.  Mélange selon la revendication 1 sous la forme d'un fil.

4.  Tissu approprié pour une utilisation pour la protection contre les arcs et les flammes, comprenant un fil qui comprend :

    a) plus de 30 % en poids de fibre d'aramide, dans lequel la fibre d'aramide est distribuée en 2 à 20 % en poids de fibre de para-aramide et 10 à 57 % en poids de fibre de méta-aramide, dans lequel la méta-aramide est du poly(métaphénylène isophtalamide) et la para-aramide est du poly(téréphtalamide de paraphénylène) ;
    b) de 20 à 35 % en poids de fibre modacrylique ;
    c) de 20 à 35 % en poids de fibre de rayonne présentant un indice limite d'oxygène de 21 ou moins, et présentant une résistance à la traction à sec de 3 grammes par denier ou plus ; et
    d) de 0 à 3 % en poids de fibre antistatique ;

    les pourcentages étant exprimés sur la base des composants a), b), c) et d) ; dans lequel la différence entre la quantité de la fibre modacrylique et la quantité de la fibre de rayonne qui sont présentes dans le fil est de 10 % en poids ou moins, et dans lequel la quantité de la fibre de rayonne est supérieure à la quantité de la fibre modacrylique ; et
    le tissu présente un poids de base dans la plage de 135 à 407 grammes par mètre carré (de 4 à 12 onces par yard carré).

5.  Tissus selon la revendication 4, dans lequel la fibre d'aramide est présente dans le fil en une quantité jusqu'à y compris 59 % en poids.

6.  Tissus selon la revendication 4, présentant une longueur carbonisée conformément à ASTM D-6413-08 inférieure à 10,2 cm (4 pouces).

7. Tissus selon la revendication 4, présentant une résistance à l'arc conformément à ASTM F-1959-06 supérieure à 0,148 joule par centimètre carré par gramme par mètre carré (1,2 calories par centimètre carré par once par yard carré) de tissu.

8. Vêtement approprié pour une utilisation dans la protection contre les arcs et les flammes, comprenant un tissu selon la revendication 4.

9. Vêtement selon la revendication 8, dans lequel le tissu présente un poids de base dans la plage de 150 à 290 grammes par mètre carré (de 4,5 à 8,5 onces par yard carré).

10. Vêtement selon la revendication 8, dans lequel la fibre d'aramide est présente dans le tissu en une quantité jusqu'à y compris 59 % en poids.

11. Vêtement selon la revendication 8 assurant une protection thermique qui est équivalente à un taux de brûlures sur le corps inférieur à 65 % pour une exposition aux flammes pendant 4 secondes conformément à ASTM F1930, tout en conservant une performance thermique à l'arc de classe 2 conformément à ASTM F1959 et à NFPA 70E.

12. Vêtement selon la revendication 8, dans lequel le tissu présente une résistance à l'arc conformément à ASTM F-1959-06 supérieure à 0,148 joule par centimètre carré par gramme par mètre carré (1,2 calories par centimètre carré par once par yard carré) de tissu.

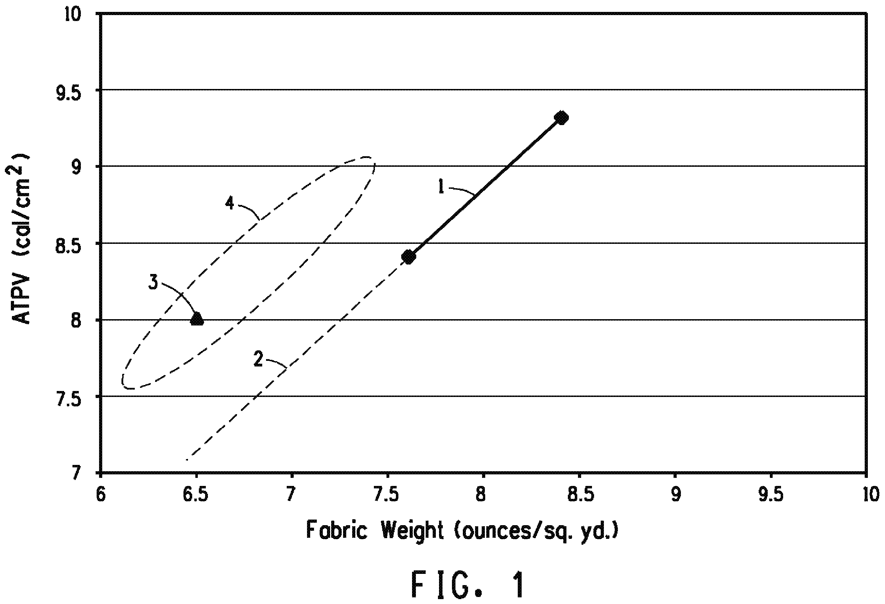

FIG. 1

EP 2 877 620 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100112312 A, Tutterow
- US 8133584 B, Zhu
- WO 2012068600 A
- WO 2008114285 A
- US 4246221 A
- US 4172938 A
- US 3869429 A
- US 3819587 A
- US 3673143 A
- US 3354127 A
- US 3094511 A
- US 4668234 A
- US 4755335 A
- US 4883496 A
- US 5096459 A
- US 3193602 A
- US 3748302 A
- US 5208105 A
- US 5506042 A
- US 4612150 A, De Howitt
- US 3803453 A, Hull

### Non-patent literature cited in the description

- Man-Made FibersScience and Technology. **W. BLACK et al.** Fiber-Forming Aromatic Polyamides. Interscience Publishers, 1968, vol. 2, 297